# EUROPÄISCHE PATENTANMELDUNG

(11) **EP 1 621 585 A2**
(43) Veröffentlichungstag der Anmeldung: **01.02.2006**
(21) Anmeldenummer: 05014241.3
(22) Anmeldetag: 30.06.2005
(51) Int. Cl.: C09C 1/00

(54) **Mehrschichtige Interferenzpigmente**

(30) Priorität: 27.07.2004 DE 102004035769
(71) Anmelder: Merck Patent GmbH, 64293 Darmstadt (DE)
(72) Erfinder: Kniess, Helge Bettina, 64331 Weiterstadt (DE); Reynders, Peter, Dr., 64347 Griesheim (DE); Pfaff, Gerhard, Dr., 64839 Münster (DE)

(57) **Zusammenfassung**

Die vorliegende Erfindung betrifft mehrschichtige Interferenzpigmente umfassend ein plättchenförmiges Substrat, das mit alternierenden Schichten von Materialien mit hoher und niedriger Brechzahl beschichtet ist, wobei die Gesamtdicke der Interferenzpigmente nicht größer als 1 µm ist. Ebenfalls Gegenstand der vorliegenden Erfindung sind Verfahren zur Herstellung dieser Pigmente, wobei ein Substrat alternierend mit Schichten von Materialien mit hoher und niedriger Brechzahl beschichtet wird, wobei die Dicken der Schichten von Materialien mit hoher und niedriger Brechzahl derart gewählt werden, dass die Gesamtdicke der Interferenzpigmente nicht größer als 1 µm wird sowie die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

## Beschreibung

Die vorliegende Erfindung betrifft mehrschichtige Interferenzpigmente umfassend ein plättchenförmiges Substrat, das mit alternierenden Schichten von Materialien mit hoher und niedriger Brechzahl beschichtet ist, wobei die Gesamtdicke der Interferenzpigmente nicht größer als 1 µm ist. Ebenfalls Gegenstand der vorliegenden Erfindung sind Verfahren zur Herstellung dieser Pigmente, wobei ein Substrat alternierend mit Schichten von Materialien mit hoher und niedriger Brechzahl beschichtet wird, wobei die Dicken der Schichten von Materialien mit hoher und niedriger Brechzahl derart gewählt werden, dass die Gesamtdicke der Interferenzpigmente nicht größer als 1 µm wird sowie die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Der Einsatz von Glanz- oder Effektpigmenten, die Interferenzerscheinungen aufweisen, ist weit verbreitet. Bei Automobillacken, dekorativen Beschichtungen aller Art sowie bei der Einfärbung von Kunststoffen, bei Anstrich- und Druckfarben, insbesondere Farben für den Sicherheitsdruck, sowie bei Anwendungen in der dekorativen Kosmetik sind derartige Pigmente unverzichtbar geworden. In der sie umgebenden Matrix richten sich diese Pigmente idealerweise parallel zur Oberfläche der Beschichtung aus und entfalten durch ein kompliziertes Zusammenspiel von Interferenz, Reflexion und Absorption des auffallenden Lichtes ihre optische Wirkung. Dabei stehen für die verschiedenen Anwendungsfälle eine brillante Farbgebung, Wechsel zwischen verschiedenen Farben in Abhängigkeit vom Betrachtungswinkel, so genannte Farbflops, oder wechselnde Helligkeitseindrücke im Mittelpunkt des Interesses.

Die Herstellung solcher Pigmente erfolgt in der Regel durch Beschichtung von plättchenförmigen metallischen oder nichtmetallischen Substraten mit Metalloxid- oder Metallschichten. In den letzten Jahren sind verstärkt Pigmente entwickelt worden, welche auf dem plättchenförmigen Träger einen Mehrschichtaufbau aufweisen. Hierdurch lassen sich vor allem Farbflops, bei denen das menschliche Auge abhängig vom Betrachtungswinkel verschiedene Farbtöne wahrnimmt, gezielt einstellen. Die meisten dieser Pigmente basieren auf plättchenförmigen Substraten aus Metallen oder künstlichen oder natürlichen Schichtsilikaten, wie Glimmer, Talk oder Glas.

Dabei weisen insbesondere die Schichtsilikate den Nachteil auf, dass die Dicke des Substrates in einem weiten Bereich variiert und nicht gezielt einstellbar ist, was dazu führt, dass auch bei transparenten Substraten Lichttransmission und -reflexion am Substrat weitgehend unkontrollierbar ablaufen und daher nicht gezielt nutzbar sind.

Aus EP 0 608 388 ist ein plättchenförmiges Pigment bekannt, welches u. a. aus einer Siliziumdioxidmatrix bestehen kann, welche mit einer oder mehreren Schichten aus dünnen, transparenten oder semitransparenten reflektierenden Schichten aus Metalloxiden oder Metallen beschichtet ist. Dabei wird die Matrix bevorzugt durch Zugabe von verschiedenen Farbmitteln eingefärbt. Es werden Pigmente mit großer Farbreinheit und hoher Farbstärke erhalten, deren Deckvermögen durch den Grad der Einfärbung der Matrix bestimmt wird. Die Dicke der Matrix kann dabei in einem breiten Bereich eingestellt werden. Es sind dort keine Pigmente beschrieben worden, die mehr als eine optisch aktive Schicht auf dem Substrat aufweisen. Diese Pigmente besitzen daher die Wirkung eines Pigmentes mit insgesamt drei optisch aktiven Schichten.

Die EP 1 025 168 beschreibt Interferenzpigmente auf der Basis von mehrfach beschichteten Substraten, die mindestens eine Schichtenfolge aus einer Beschichtung mit einem Brechungsindex n ≥ 2.0, einer farblosen Beschichtung mit einem Brechungsindex n ≤ 1.8 und einer nicht absorbierenden hochbrechenden Beschichtung aufweisen. Die Substrate haben eine bevorzugte Dicke von 0.2 bis 4.5 µm und die Dicken der einzelnen Schichten betragen vorzugsweise 20-350 nm für die hochbrechende Schicht bzw. 30-600 nm für die niedrigbrechende Schicht und 20-350 nm für die nicht absorbierende hochbrechende Beschichtung. Insbesondere die große Dicke der niedrigbrechenden Schicht sorgt dafür, dass Pigmente mit einer relativ großen Gesamtdicke erhalten werden. Dies ist für viele Anwendungen aber ungünstig, da sich die anwendungstechnischen Eigenschaften der Pigmente verschlechtern, ein Phänomen, das beispielsweise durch P. Hoffmann, W. Duschek, Neue Effektpigmente, im Berichtsband DFG 41, 1999, 50, 123-132 beschrieben wird. Dicke Pigmente zeigen beispielsweise in Lackanwendungen Probleme bei der anzustrebenden parallelen Orientierung. Durch die ungünstige Geometrie der dickeren Pigmentpartikel wird die gewünschte, parallel zur Oberfläche erfolgende, Orientierung im Bindemittelsystem erschwert. Dickere Pigmentteilchen ordnen sich tendenziell schräg zueinander an, so dass das Licht nicht mehr optimal gerichtet reflektiert wird und Streueffekte den gerichteten Glanz reduzieren. Hieraus ergeben sich anwendungstechnische Nachteile, wie z.B. einen erhöhten Haze-Effekt (Glanzschleier) und eine schlechtere Abbildungsschärfe (DOI) der Pigmenthaltigen Beschichtungen. Weiterhin entstehen koloristische Nachteile allein dadurch, dass sich aufgrund der hohen Masse der Einzelpartikel bei gleicher Masseneinwaage eine erheblich geringere Anzahl an Pigmentteilchen in der Lackanwendung befindet. Dies hat nachteilige Auswirkungen auf das Deckvermögen, den Glanz und den Gesamtfarbeindruck. Die gewünschten Eigenschaften lassen sich daher im Falle dicker Pigmentteilchen nur schlecht realisieren.

Aus JP 07-246366 sind Interferenzmaterialien bekannt umfassend ein Substrat, beispielsweise Glas, und einen mehrschichtigen Aufbau aus hoch- und niedrigbrechenden Schichten, wobei die Erzielung einer maximalen Reflektivität der Interferenzmaterialien das wesentliche Ziel ist. Genannt wird beispielsweise ein Pigment mit insgesamt neun Schichten auf dem Substrat mit einer Reflektivität von 99%. Durch die Schichtdicken der einzelnen Schichten und der Substrate werden auch hier relativ dicke Pigmente erhalten, die aus den oben genannten Gründen für eine Reihe von Anwendungen ungeeignet sind. Die theoretisch erreichbare Reflektivität verringert sich erheblich, wenn die Pigmentgeometrie zunehmend würfelförmig wird, das heißt wenn sich das Verhältnis von Durchmesser und Dicke dem Wert 1 annähert. Eine optimale Ausrichtung der plättchenförmigen Pigmente ist nicht mehr gegeben und der gerichtete Glanz wird deutlich verringert.

Es bestand daher die Aufgabe, Interferenzpigmente zu finden, die sich universell in verschiedensten Anwendungen einsetzen lassen, ohne dabei anwendungstechnische Nachteile zu zeigen. Gleichzeitig sollen die Pigmente interessante Farbeffekte zeigen, vorzugsweise mit Farbflops bei Betrachtung in unterschiedlichen Betrachtungswinkeln.

Die oben genannte Aufgabe wird durch Pigmente gemäß der vorliegenden Erfindung gelöst. Gegenstand der vorliegenden Erfindung sind demnach mehrschichtige Interferenzpigmente umfassend ein plättchenförmiges Substrat, das mit alternierenden Schichten von Materialien mit hoher und niedriger Brechzahl beschichtet ist, wobei die Gesamtdicke der Interferenzpigmente nicht größer als 1 µm ist.

Ebenfalls Gegenstand der vorliegenden Erfindung sind Verfahren zur Herstellung dieser Pigmente, bei denen ein Substrat alternierend mit Schichten von Materialien mit hoher und niedriger Brechzahl beschichtet wird, wobei die Dicken der Schichten von Materialien mit hoher und niedriger Brechzahl derart gewählt werden, dass die Gesamtdicke der Interferenzpigmente nicht größer als 1 µm wird.

Die erfindungsgemäßen Pigmente haben den Vorteil, dass sie in den unterschiedlichsten Anwendungen eingesetzt werden können und dabei verbesserte anwendungstechnische Eigenschaften zeigen, beispielsweise einen reduzierten Haze- Effekt und eine bessere Abbildungsschärfe (DOI) in Lackanwendungen bzw. ein besseres Hautgefühl in kosmetischen Formulierungen.

Gleichzeitig ermöglichen die erfindungsgemäßen Interferenzpigmente die Bereitstellung eines breiten Farbenspektrums, das vielfach mit dem Auftreten von Farbflops bei Betrachtung aus unterschiedlichen Winkeln einhergeht. Vielfach ist dieser Farbflop auch ausgeprägter und deutlicher als bei Pigmenten aus dem Stand der Technik. So zeigen die erfindungsgemäßen Pigmente ein verbessertes Deckvermögen, einen höheren gerichteten Glanz und eine verbesserte Orientierung der Pigmentpartikel im Anwendungsmedium. Die definierte Schichtenfolge unter Berücksichtigung der maximalen Gesamtdicke der Pigmente führt also zu Interferenzpigmenten, die maßgebliche Anwendungsvorteile mit Verbesserungen der erzielbaren optischen Effekte kombinieren.

Aufgrund der vorteilhaften Eigenschaften eignen sich die erfindungsgemäßen Interferenzpigmente universell für eine große Anzahl unterschiedlichster Anwendungen. Gegenstand der vorliegenden Erfindung ist demgemäss auch die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Die erfindungsgemäßen Pigmente basieren auf plättchenförmigen Substraten, beispielsweise Glimmer oder Schichtsilikaten. Vorzugsweise handelt es sich bei den plättchenförmigen Substraten um synthetische Plättchen. Die synthetischen Plättchen können unter anderem aus Siliciumdioxid, Zinndioxid, Zirkoniumdioxid, Glas, Aluminiumoxid, Titandioxid, Magnesiumfluorid und/oder Eisenoxid bestehen. Das Substrat des erfindungsgemäßen Interferenzpigmentes besteht vorzugsweise aus plättchenförmigen Siliziumdioxidpartikeln, welche über eine einheitliche Schichtdicke verfügen und vorzugsweise gemäß der internationalen Anmeldung WO 93/08237 auf einem endlosen Band durch Verfestigung und Hydrolyse einer Wasserglaslösung hergestellt werden. Unter einheitlicher Schichtdicke wird dabei eine Schichtdickentoleranz von 3 bis 10%, bevorzugt von 3 bis 5 % der Gesamttrockenschichtdicke der Partikel verstanden. Die plättchenförmigen Siliziumdioxidpartikel liegen im allgemeinen in amorpher Form vor. Synthetische Plättchen dieser Art haben gegenüber natürlichen Materialien, wie z.B. Glimmer, den Vorteil, dass die Schichtdicke im Hinblick auf die gewünschten Effekte eingestellt werden kann und die Schichtdickentoleranz begrenzt ist. Auf diese Weise lassen sich in vereinfachter Form Interferenzpigmente gemäß der vorliegenden Erfindung herstellen, deren Gesamtdicke 1 µm nicht überschreitet.

Der Durchmesser der Substrate liegt üblicherweise zwischen 1 und 250 µm, vorzugsweise zwischen 2 und 100 µm. Ihre Dicke beträgt zwischen 100 und 600 nm, bevorzugt 200 bis 500 nm und besonders bevorzugt 200 bis 375 nm. Das mittlere Aspektverhältnis der plättchenförmigen Substrate, das heißt das Verhältnis vom mittleren Längenmesswert, der hier dem mittleren Durchmesser entspricht, zum mittleren Dickenmesswert, beträgt üblicherweise 5 bis 200, bevorzugt 20 bis 150 und besonders bevorzugt 30 bis 120.

Die genannten Substrate sind in den erfindungsgemäßen Pigmenten mit alternierenden Schichten von Materialien mit hoher und niedriger Brechzahl beschichtet. Materialien mit hoher Brechzahl meint Materialien, bei denen die Brechzahl n > 1.8 ist und Materialien mit niedriger Brechzahl meint Materialien, bei denen die Brechzahl n ≤ 1.8 ist. Die Materialien mit hoher und niedriger Brechzahl können dabei ausgewählt sein aus der Gruppe der Metalloxide, Metalloxidhydrate, Metallsuboxide, Metalle, Metallfluoride, Metallnitride, Metalloxynitride, BiOCl und/oder Mischungen hieraus. Vorzugsweise handelt es sich bei den Materialien mit hoher und niedriger Brechzahl um Metalloxide, Metalloxidhydrate und/oder Mischungen hieraus. Als Metalloxide und Metalloxidhydrate eignen sich alle als Schichten aufzubringende Metalloxide oder Metalloxidhydrate, wie z.B. Aluminiumoxid, Aluminiumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxide, Metalle, Metallfluoride und/oder Metalloxidhydrate und ganz besonders bevorzugt Metalloxide und/oder Metalloxidhydrate als Materialien mit hoher und niedriger Brechzahl eingesetzt.

Besonders geeignete Materialien mit hoher Brechzahl sind beispielsweise TiO₂, ZrO₂, ZnO, SnO₂, BiOCl und/oder Mischungen hieraus. Besonders bevorzugt ist TiO₂. Die Dicke dieser Schichten beträgt dabei jeweils etwa 100 bis 300 nm und bevorzugt 30 bis 200 nm.

Besonders geeignete Materialien mit niedriger Brechzahl sind beispielsweise SiO₂, SiO(OH)₂, Al₂O₃, AIO(OH), B₂O₃, MgF₂ und/oder Mischungen hieraus. Besonders bevorzugt ist SiO₂. Die Dicke der einzelnen Schichten aus diesen Materialien beträgt zwischen 20 und 100 nm, bevorzugt 20 bis 80 nm.

Die äußere Schicht der erfindungsgemäßen Interferenzpigmente besteht vorzugsweise aus einem hochbrechenden Material, insbesondere aus TiO₂. Ausgehend von dieser Bedingung ergeben sich für den bevorzugten Aufbau der erfindungsgemäßen Pigmente bestimmte Gesetzmäßigkeiten. Besteht das Substrat aus einem hochbrechenden Material, wie z.B. TiO₂ oder Eisenoxid, so erfolgt eine Belegung mit einer Schicht eines Materials mit niedriger Brechzahl und einer Schicht eines Materials mit hoher Brechzahl. Auf diese Weise wird ein Pigment mit insgesamt fünf Schichten, einschließlich des Substrates, erhalten. Im Rahmen der vorliegenden Erfindung wird dabei davon ausgegangen, dass die Belegung vorzugsweise umhüllend erfolgt, das heißt, sowohl das Substrat als auch alle nachfolgenden belegten Zwischenstufen werden in jedem Beschichtungsschritt auf jeder Seite der Plättchen beschichtet. Neben einem Pigment mit fünf Schichten ist auch ein Pigment mit insgesamt neun Schichten im Rahmen der vorliegenden Erfindung denkbar, so lange die Bedingung erfüllt ist, dass die Gesamtdicke der Pigmente nicht größer als 1 µm wird.

Vorzugsweise handelt es sich bei dem Substratmaterial um ein Material mit niedriger Brechzahl, insbesondere um SiO₂. In diesem Falle erfüllen Pigmente mit drei und sieben Schichten die Bedingung, dass die äußere Schicht aus einem hochbrechenden Material ist. Vorzugsweise umfassen die erfindungsgemäßen Interferenzpigmente insgesamt sieben Schichten einschließlich des Substrates. Insbesondere bei Pigmenten mit sieben Schichten kommt es auf die Dicke der einzelnen Schichten an, damit die Grundbedingung erfüllt bleibt, dass die Gesamtdicke der Pigmente nicht größer als 1 µm ist. In diesem Zusammenhang ist die Dicke der Schichten aus Materialien mit niedriger Brechzahl von besonderer Bedeutung. Im Rahmen der vorliegenden Erfindung ist es gelungen, unter Beibehaltung bzw. Optimierung der coloristischen Eigenschaften, die Dicke der Schichten aus Materialien mit niedriger Brechzahl so einzustellen, dass die Gesamtdicke der erfindungsgemäßen Pigmente kleiner ist als jene aus dem Stand der Technik. Mit der vorliegenden Erfindung ist es also möglich, dünnere Pigmente mit verbesserten optischen Eigenschaften bereit zu stellen. Dies wirkt sich vorteilhaft sowohl auf die anwendungstechnischen Eigenschaften als auch auf die Herstellkosten der Pigmente aus. Letztere können durch den geringeren Material- und Zeitaufwand bei der Herstellung gesenkt werden.

Im Fall der oben genannten erfindungsgemäßen Pigmente mit insgesamt sieben Schichten, liegen insgesamt zwei umhüllende Schichten aus Materialien mit hoher Brechzahl vor. Diese Schichten können aus gleichen oder verschiedenen Materialien bestehen und gleiche oder verschiedene Schichtdicken aufweisen. Vorzugsweise bestehen sie aus gleichen Materialien, insbesondere aus TiO₂. In der vorliegenden Erfindung ganz besonders bevorzugte Pigmente weisen demgemäss folgenden Aufbau auf:

TiO₂/SiO₂/TiO₂/Substrat(SiO₂)/TiO₂/SiO₂/TiO₂

In einer weiteren Ausführungsform der vorliegenden Erfindung können die erfindungsgemäßen Effektpigmente weiterhin mit einer zusätzlichen organischen Beschichtung als äußere Schicht versehen sein. Beispiele für derartige Beschichtungen finden sich z.B. in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805, deren Offenbarung hiermit unter Bezugnahme mit eingeschlossen ist. Effektpigmente enthaltend diese organische Beschichtung, z.B. aus Organosilanen oder Organotitanaten bzw. Organozirkonaten zeigen neben den bereits genannten verbesserten optischen Eigenschaften zusätzlich eine erhöhte Stabilität gegenüber Witterungseinflüssen, wie z.B.

Feuchtigkeit und Licht, was vor allem für Industrielacke und im Automobilbereich von besonderem Interesse ist.

Ebenfalls Gegenstand der vorliegenden Erfindung sind Verfahren zur Herstellung der erfindungsgemäßen Interferenzpigmente, bei denen ein Substrat alternierend mit Schichten von Materialien mit hoher und niedriger Brechzahl beschichtet wird, wobei die Dicken der Schichten von Materialien mit hoher und niedriger Brechzahl derart gewählt werden, dass die Gesamtdicke der Interferenzpigmente nicht größer als 1 µm wird.

Die Beschichtung mit Schichten von Materialien mit niedriger Brechzahl erfolgt dabei vorzugsweise derart, dass die Dicke der Schichten zwischen 20 und 100 nm beträgt. Auf diese Weise wird in den erfindungsgemäßen Verfahren sichergestellt, dass die Gesamtdicke den geforderten Wert nicht übersteigt.

Die Beschichtung mit Schichten von Materialien mit hoher und niedriger Brechzahl kann nasschemisch, durch Sol-Gel-Verfahren und/oder durch CVD- oder PVD-Verfahren erfolgen.

Vorzugsweise handelt es sich bei den erfindungsgemäßen Verfahren zur Herstellung der Interferenzpigmente um nasschemische Verfahren, bei denen die bekannten, zur Herstellung von Perlglanzpigmenten entwickelten nasschemischen Beschichtungstechnologien angewendet werden können, die beispielsweise in den folgenden Publikationen beschrieben sind:
DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017.

Zur Beschichtung wird das plättchenförmige Substrat in Wasser suspendiert und abwechselnd, vorzugsweise mehrfach, mit einem Metalloxid, Metalloxidhydrat, Metallsuboxid, Metall, Metallfluorid, Metallnitrid, Metalloxynitrid und/oder Mischungen hieraus mit hoher Brechzahl und mit einem Metalloxid, Metalloxidhydrat, Metallsuboxid, Metall, Metallfluorid, Metallnitrid, Metalloxynitrid und/oder Mischungen hieraus mit niedriger Brechzahl durch Zugabe und Fällung der entsprechenden anorganischen Metallverbindungen beschichtet, wobei durch gleichzeitige Zugabe von Säure oder Base der für die Fällung des jeweiligen Metalloxids, Metalloxidhydrats, Metallsuboxids, Metalls, Metallfluorids, Metallnitrids, Metalloxynitrids notwendige pH-Wert eingestellt und konstant gehalten wird und anschließend das beschichtete Substrat aus der wässrigen Suspension abgetrennt, getrocknet und gegebenenfalls kalziniert wird, und wobei die Schichtdicken der einzelnen Schichten so eingestellt werden, dass nach dem Trocknen und gegebenenfalls Kalzinieren die Dicke des Pigmentes nicht größer als 1 µm ist.

Die Kalzinierungstemperatur kann dabei im Hinblick auf die jeweils vorhandene Beschichtung optimiert werden. Im Allgemeinen liegt die Kalzinierungstemperatur jedoch zwischen 250 und 1000°C, insbesondere zwischen 350 und 900°C. Die Pigmente können auch nach dem Aufbringen jeder einzelnen Schicht abgetrennt, getrocknet und gegebenenfalls kalziniert werden, bevor sie zur Aufbringung der nächsten Schicht erneut dispergiert werden.

Wenn das Material mit hoher Brechzahl TiO₂ ist, wird zum Aufbringen dieser Schichten bevorzugt das in US 3,553,001 beschriebene Verfahren eingesetzt. Dabei wird zu einer auf etwa 50-100°C, insbesondere 70-80°C erhitzten Suspension der plättchenförmigen, gegebenenfalls bereits vorbeschichteten, Substrate langsam eine wässrige Lösung eines anorganischen Titansalzes zugegeben und der pH-Wert durch gleichzeitiges Zudosieren einer Base bei 0.5 bis 5, insbesondere etwa 1.5 bis 2.5, weitgehend konstant gehalten. Sobald die gewünschte Schichtdicke des TiO₂-Oxidhydrates erreicht ist, wird die Zugabe der Titansaiziösung und der Base gestoppt. Dieses Verfahren wird auch als Titrationsverfahren bezeichnet und weist die Besonderheit auf, dass kein Überschuss an Titansalz vorliegt, sondern pro Zeiteinheit immer nur eine solche Menge bereitgestellt wird, wie für eine gleichmäßige Beschichtung mit dem hydratisierten TiO₂ erforderlich ist und auch von der Oberfläche des zu beschichtenden Substrates aufgenommen werden kann. In der Lösung sind daher keine hydratisierten Titandioxidteilchen vorhanden, die nicht auf der zu beschichtenden Oberfläche abgeschieden werden.

Wenn das Material mit einer niedrigen Brechzahl Siliziumdioxid ist, wird zum Aufbringen der entsprechenden Schicht oder Schichten vorzugsweise das folgende Verfahren angewandt:
Eine Natronwasserglaslösung wird zu einer auf etwa 50 bis 100°C, insbesondere 70 bis 80°C, erhitzten Suspension des bereits ein- oder mehrfach beschichteten Substrates gegeben. Gleichzeitig wird durch Zugabe einer 10%-igen Salzsäure der pH-Wert bei 4 bis 10, vorzugsweise bei 6.5 bis 8.5, konstant gehalten. Wenn die Zugabe der Wasserglaslösung beendet ist, wird noch etwa 30 Minuten nachgerührt. Alternativ lassen sich Schichten aus SiO₂ auch durch Sol-Gel-Verfahren herstellen, wobei entsprechende Vorstufen, beispielsweise Tetraethoxysilan, eingesetzt werden.

Prinzipiell sind für die Herstellung der erfindungsgemäßen Pigmente auch CVD- oder PVD-Verfahren zur Beschichtung von Partikeln, insbesondere mit Metallen, geeignet. Dabei ist es erforderlich, dass das Substrat während des Bedampfungsvorganges gleichmäßig in Bewegung gehalten wird, damit eine homogene Beschichtung aller Partikeloberflächen gewährleistet ist.

Darüber hinaus kann in einem ebenfalls erfindungsgemäßen Verfahren zusätzlich als äußere Schicht eine organische Beschichtung aufgebracht werden. Beispiele für derartige Beschichtungsverfahren finden sich unter anderem in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805. Beispiele für organische Beschichtungen sowie die damit verbundenen Vorteile sind bereits vorab beim Aufbau der erfindungsgemäßen Pigmente beschrieben worden. Der Verfahrensschritt der Aufbringung der organischen Beschichtung kann direkt an die anderen Schritte des erfindungsgemäßen Verfahrens angeschlossen werden. Die hierbei aufgebrachten Stoffe umfassen lediglich einen Gewichtsanteil von 0.1 bis 5 Gew. %, vorzugsweise 0.5 bis 3 Gew. %, des gesamten Pigmentes.

Die erfindungsgemäßen Interferenzpigmente sind vielseitig einsetzbar und können in vielen Bereichen eingesetzt werden. Demgemäss ist die Verwendung der erfindungsgemäßen Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten ebenfalls Gegenstand der vorliegenden Erfindung.

Im Falle von Kosmetika eignen sich die erfindungsgemäßen Interferenzpigmente besonders für Produkte und Formulierungen der dekorativen Kosmetik, wie z.B. Nagellacke, farbgebende Puder, Lippenstifte oder Lidschatten, Seifen, Zahnpasten etc. Selbstverständlich können die erfindungsgemäßen Interferenzpigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z.B. Verdicker und rheologische Zusatzstoffe wie etwa Bentonite, Hektorite, Siliziumdioxid, Ca-Silikate, Gelatine, hochmolekulare Kohlenhydrate und/oder oberflächenaktive Hilfsmittel, etc. Die erfindungsgemäße Interferenzpigmente enthaltenden Formulierungen können dem lipophilen, hydrophilen oder hydrophoben Typ angehören. Bei heterogenen Formulierungen mit diskreten wässrigen und nicht-wässrigen Phasen können die erfindungsgemäßen Partikel in jeweils nur einer der beiden Phasen enthalten oder auch über beide Phasen verteilt sein.

Die pH-Werte der wässrigen Formulierungen können zwischen 1 und 14, bevorzugt zwischen 2 und 11 und besonders bevorzugt zwischen 5 und 8 liegen. Den Konzentrationen der erfindungsgemäßen Interferenzpigmente in der Formulierung sind keine Grenzen gesetzt. Sie können - je nach Anwendungsfall - zwischen 0,001 (rinse-off-Produkte, z.B. Duschgele) - 99% (z.B. Glanzeffekt-Artikel für besondere Anwendungen) liegen. Die erfindungsgemäßen Interferenzpigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E etc.), Selbstbräuner (z.B. DHA, Erythrolose u.a.) sowie weitere kosmetische Wirkstoffe wie z.B. Bisabolol, LPO, Ectoin, Emblica, Allantoin, Bioflavanoide und deren Derivate.

Bei Einsatz der Interferenzpigmente in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Außenanwendungen. Die Lacke und Farben können hierbei beispielsweise strahlungshärtend, physikalisch trocknend oder chemisch härtend sein. Für die Herstellung der Druckfarben oder Flüssiglacke ist eine Vielzahl von Bindern, z.B. auf der Basis von Acrylaten, Methacrylaten, Polyestern, Polyurethanen, Nitrocellulose, Ethylcellulose, Polyamid, Polyvinylbutyrat, Phenolharzen, Maleinharzen, Stärke oder Polyvinylalkohol, Aminharzen, Alkydharzen, Epoxidharzen, Polytetrafluorethylen, Polyvinylidenfluoriden, Polyvinylchlorid oder Mischungen hieraus geeignet, insbesondere wasserlösliche Typen. Bei den Lacken kann es sich um Pulverlacke oder wasser- oder lösemittelbasierte Lacke handeln, wobei die Auswahl der Lackbestandteile dem Allgemeinwissen des Fachmanns unterliegt. Gängige polymere Bindemittel für Pulverlacke sind beispielsweise Polyester, Epoxide, Polyurethane, Acrylate oder Mischungen hieraus.

Darüber hinaus können die erfindungsgemäßen Interferenzpigmente in Folien und Kunststoffen verwendet werden, so z.B. in Agrarfolien, infrarotreflektierenden Folien und Scheiben, Geschenkfolien, Kunststoffbehältnissen und Formkörpern für alle dem Fachmann bekannten Anwendungen. Als Kunststoffe eignen sich alle gängigen Kunststoffe für die Einarbeitung der erfindungsgemäßen Interferenzpigmente, z.B. Duromere oder thermoplastische Kunststoffe. Die Beschreibung der Anwendungsmöglichkeiten und der einsetzbaren Kunststoffe, Verarbeitungsverfahren und Additive finden sich z.B. in der RD 472005 oder in R. Glausch, M. Kieser, R. Maisch, G. Pfaff, J. Weitzel, Perlglanzpigmente, Curt R. Vincentz Verlag, 1996, 83 ff., deren Offenbarungsgehalt hier mit umfasst ist.

Darüber hinaus eignen sich die erfindungsgemäßen Interferenzpigmente auch für den Einsatz im Sicherheitsdruck und in sicherheitsrelevanten Merkmalen für z.B. fälschungssichere Karten und Ausweise, wie z.B. Eintrittskarten, Personalausweise, Geldscheine, Schecks und Scheckkarten sowie für andere fälschungssichere Dokumente. Im Bereich der Landwirtschaft können die Interferenzpigmente zur Einfärbung von Saatgut und anderen Ausgangsgütern verwendet werden, darüber hinaus im Lebensmittelbereich zur Pigmentierung von Lebensmitteln. Zur Pigmentierung von Überzügen in Arzneimitteln wie z.B. Tabletten oder Dragees sind die erfindungsgemäßen Interferenzpigmente ebenfalls einsetzbar.

Die erfindungsgemäßen Interferenzpigmente eignen sich in den oben genannten Anwendungsgebieten ebenso zur Verwendung in Abmischungen mit organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc. Die erfindungsgemäßen Interferenzpigmente können in jedem Verhältnis mit handelsüblichen Pigmenten und Füllern gemischt werden.

Als Füllstoffe sind z.B. natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z.B. plättchenförmig, sphärisch oder nadelförmig sein.

Die erfindungsgemäßen Interferenzpigmente sind weiterhin geeignet zur Herstellung von fließfähigen Pigmentpräparationen und Trockenpräparaten enthaltend ein oder mehrere erfindungsgemäße Partikel, Bindemittel und optional ein oder mehrere Additive. Unter Trockenpräparate sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0.2-80 mm auf. Die Trockenpräparate finden insbesondere Anwendung bei der Herstellung von Druckfarben und in kosmetischen Formulierungen.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu begrenzen.

### Beispiele

### Beispiel 1:

100 g SiO₂-Flakes mit einer mittleren Schichtdicke von 350 nm werden in 1.9 I voll entsalztem Wasser unter Rühren suspendiert und auf 75°C erhitzt. Der pH-Wert der Suspension wird mit 18%-iger Salzsäure auf 2.2 eingestellt. 524 g einer 30%-igen Titantetrachloridlösung (hergestellt durch Lösung von 262 g Titantetrachloridlösung (w=60 Gew.-%) in 262 g voll entsalztem Wasser) werden zudosiert, wobei der pH-Wert durch gleichzeitiges Zutropfen einer 32%-igen Natronlauge konstant gehalten wird. Nach vollständiger Zugabe wird 15 Minuten nachgerührt. Anschließend wird der pH-Wert der Suspension mit 32%-iger Natronlauge auf 7.5 eingestellt und es wird 15 Minuten nachgerührt. Danach wird eine Natronwasserglas-Lösung (116 g Natronwasserglas-Lösung enthaltend 27 Gew.-% SiO₂, gelöst in 116 g voll entsalztem Wasser) zugetropft, wobei der pH-Wert durch gleichzeitiges Zudosieren einer 18%-igen Salzsäure konstant bei 7.5 gehalten wird. Nach vollständiger Zugabe wird 30 Minuten nachgerührt. Nun wird der pH-Wert der Suspension mit 18%-iger Salzsäure auf 2.2 eingestellt, 30 Minuten nachgerührt und 641 g einer 30%-igen Titantetrachloridlösung zugetropft. Durch Zugabe von 32%-iger Natronlauge wird der pH-Wert bei konstant 2.2 gehalten. Es wird erneut 15 Minuten nachgerührt.
Das Produkt wird abfiltriert, gewaschen, getrocknet, bei 800°C kalziniert und durch ein 100 µm Sieb gesiebt.

Man erhält ein Interferenzpigment mir folgendem Aufbau:
TiO₂ (98 nm)/SiO₂ (60 nm)/TiO₂ (80 nm)/Substrat(SiO₂) (350 nm)/TiO₂ (80 nm)/SiO₂ (60 nm)/TiO₂ (98 nm)
Die Gesamtdicke des Pigmentes beträgt 0.826 µm.

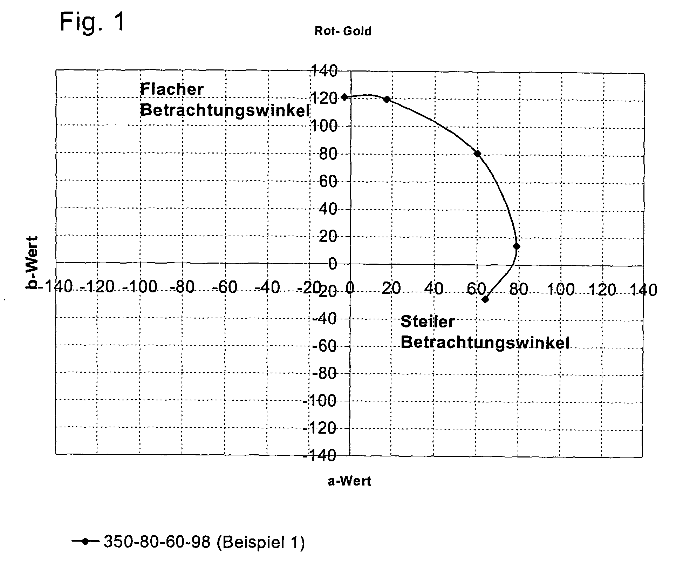

Es werden Lackkarten durch Einarbeitung in Nitrocellulose-Lack angefertigt, die coloristisch vermessen werden. Das entsprechende L,a,b-Farbdiagramm nach Hunter ist in Fig. 1 dargestellt. Es zeigt vom steilen zum flachen Betrachtungswinkel einen Farbflop von Rot nach Gold.

### Beispiel 2:

100 g SiO₂-Flakes mit einer mittleren Schichtdicke von 450 nm werden in 1.9 I voll entsalztem Wasser unter Rühren suspendiert und auf 75°C erhitzt. Der pH-Wert der Suspension wird mit 18%-iger Salzsäure auf 2.2 eingestellt. 458 g einer 30%-igen Titantetrachloridlösung (hergestellt durch Lösung von 229 g Titantetrachloridlösung (w=60 Gew.-%) in 229 g voll entsalztem Wasser) werden zudosiert, wobei der pH-Wert durch gleichzeitiges Zutropfen einer 32%-igen Natronlauge konstant gehalten wird. Nach vollständiger Zugabe wird 15 Minuten nachgerührt. Anschließend wird der pH-Wert der Suspension mit 32%-iger Natronlauge auf 7.5 eingestellt und es wird 15 Minuten nachgerührt. Danach wird eine Natronwasserglas-Lösung (97 g Natronwasserglas-Lösung enthaltend 27 Gew.-% SiO₂, gelöst in 97 g voll entsalztem Wasser) zugetropft, wobei der pH-Wert durch gleichzeitiges Zudosieren einer 18%-igen Salzsäure konstant bei 7.5 gehalten wird. Nach vollständiger Zugabe wird 30 Minuten nachgerührt. Nun wird der pH-Wert der Suspension mit 18%-iger Salzsäure auf 2.2 eingestellt, 30 Minuten nachgerührt und 608 g einer 30%-igen Titantetrachloridlösung zugetropft. Durch Zugabe von 32%-iger Natronlauge wird der pH-Wert bei konstant 2.2 gehalten. Es wird erneut 15 Minuten nachgerührt.

Das Produkt wird abfiltriert, gewaschen, getrocknet, bei 800°C kalziniert und durch ein 100 µm Sieb gesiebt.

Man erhält ein Interferenzpigment mir folgendem Aufbau:
TiO₂ (93 nm)/SiO₂ (50 nm)/TiO₂ (70 nm)/Substrat(SiO₂) (450 nm)/TiO₂ (70 nm)/SiO₂ (50 nm)/TiO₂ (93 nm)
Die Gesamtdicke des Pigmentes beträgt 0.876 µm.

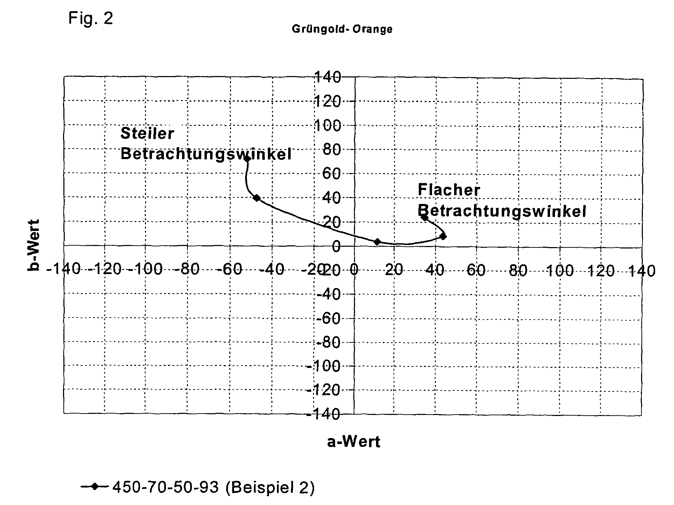

Es werden Lackkarten durch Einarbeitung in Nitrocellulose-Lack angefertigt, die coloristisch vermessen werden. Das entsprechende L,a,b-Farbdiagramm nach Hunter ist in Fig. 2 dargestellt. Es zeigt vom steilen zum flachen Betrachtungswinkel einen Farbflop von Grüngold nach Orange.

### Beispiel 3:

100 g SiO₂-Flakes mit einer mittleren Schichtdicke von 320 nm werden in 1.9 I voll entsalztem Wasser unter Rühren suspendiert und auf 75°C erhitzt. Der pH-Wert der Suspension wird mit 18%-iger Salzsäure auf 2.2 eingestellt. 850 g einer 30%-igen Titantetrachloridlösung (hergestellt durch Lösung von 425 g Titantetrachloridlösung (w=60 Gew.-%) in 425 g voll entsalztem Wasser) werden zudosiert, wobei der pH-Wert durch gleichzeitiges Zutropfen einer 32%-igen Natronlauge konstant gehalten wird. Nach vollständiger Zugabe wird 15 Minuten nachgerührt. Anschließend wird der pH-Wert der Suspension mit 32%-iger Natronlauge auf 7.5 eingestellt und es wird 15 Minuten nachgerührt. Danach wird eine Natronwasserglas-Lösung (77 g Natronwasserglas-Lösung enthaltend 27 Gew.-% SiO₂, gelöst in77 g voll entsalztem Wasser) zugetropft, wobei der pH-Wert durch gleichzeitiges Zudosieren einer 18%-igen Salzsäure konstant bei 7.5 gehalten wird. Nach vollständiger Zugabe wird 30 Minuten nachgerührt. Nun wird der pH-Wert der Suspension mit 18%-iger Salzsäure auf 2.2 eingestellt, 30 Minuten nachgerührt und 687g einer 30%-igen Titantetrachloridlösung zugetropft. Durch Zugabe von 32%-iger Natronlauge wird der pH-Wert bei konstant 2.2 gehalten. Es wird erneut 15 Minuten nachgerührt.
Das Produkt wird abfiltriert, gewaschen, getrocknet, bei 800°C kalziniert und durch ein 100 µm Sieb gesiebt.

Man erhält ein Interferenzpigment mir folgendem Aufbau:
TiO₂ (105 nm)/SiO₂ (40 nm)/TiO₂ (130 nm)/Substrat(SiO₂) (320 nm)/TiO₂ (40 nm)/SiO₂ (130 nm)/TiO₂ (105 nm)
Die Gesamtdicke des Pigmentes beträgt 0.87 µm.

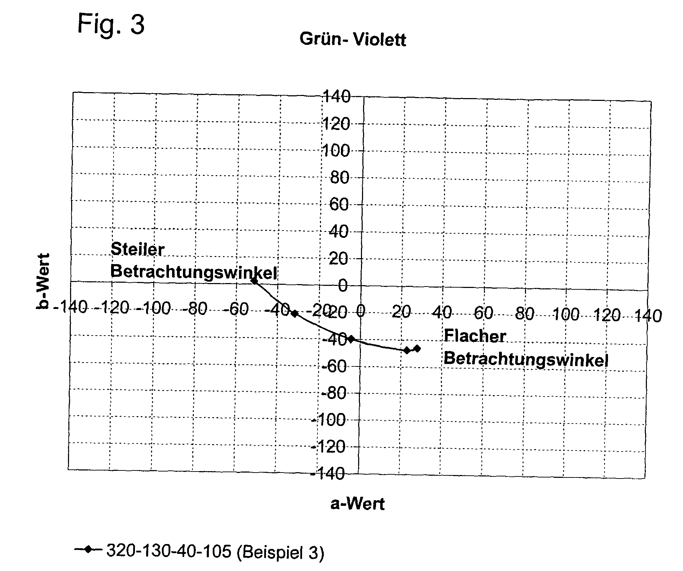

Es werden Lackkarten durch Einarbeitung in Nitrocellulose-Lack angefertigt, die coloristisch vermessen werden. Das entsprechende L,a,b-Farbdiagramm nach Hunter ist in Fig. 3 dargestellt. Es zeigt vom steilen zum flachen Betrachtungswinkel einen Farbflop von Grün nach Violett.

### Beispiel 4:

100 g SiO₂-Flakes mit einer mittleren Schichtdicke von 220 nm werden in 1.9 I voll entsalztem Wasser unter Rühren suspendiert und auf 75°C erhitzt. Der pH-Wert der Suspension wird mit 18%-iger Salzsäure auf 2.2 eingestellt. 262 g einer 30%-igen Titantetrachloridlösung (hergestellt durch Lösung von 131 g Titantetrachloridlösung (w=60 Gew.-%) in 131 g voll entsalztem Wasser) werden zudosiert, wobei der pH-Wert durch gleichzeitiges Zutropfen einer 32%-igen Natronlauge konstant gehalten wird. Nach vollständiger Zugabe wird 15 Minuten nachgerührt. Anschließend wird der pH-Wert der Suspension mit 32%-iger Natronlauge auf 7.5 eingestellt und es wird 15 Minuten nachgerührt. Danach wird eine Natronwasserglas-Lösung (135 g Natronwasserglas-Lösung enthaltend 27 Gew.-% SiO₂, gelöst in 135 g voll entsalztem Wasser) zugetropft, wobei der pH-Wert durch gleichzeitiges Zudosieren einer 18%-igen Salzsäure konstant bei 7.5 gehalten wird. Nach vollständiger Zugabe wird 30 Minuten nachgerührt. Nun wird der pH-Wert der Suspension mit 18%-iger Salzsäure auf 2.2 eingestellt, 30 Minuten nachgerührt und 654 g einer 30%-igen Titantetrachloridlösung zugetropft. Durch Zugabe von 32%-iger Natronlauge wird der pH-Wert bei konstant 2.2 gehalten. Es wird erneut 15 Minuten nachgerührt.
Das Produkt wird abfiltriert, gewaschen, getrocknet, bei 800°C kalziniert und durch ein 100 µm Sieb gesiebt.

Man erhält ein Interferenzpigment mir folgendem Aufbau:
TiO₂ (100 nm)/SiO₂ (70 nm)/TiO₂ (40 nm)/Substrat(SiO₂) (220 nm)/TiO₂ (40 nm)/SiO₂ (70 nm)/TiO₂ (100 nm)
Die Gesamtdicke des Pigmentes beträgt 0.64 µm.

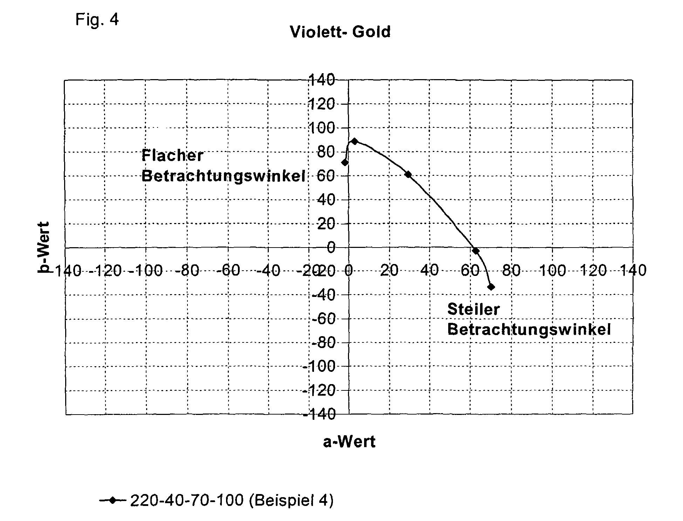

Es werden Lackkarten durch Einarbeitung in Nitrocellulose-Lack angefertigt, die coloristisch vermessen werden. Das entsprechende L,a,b-Farbdiagramm nach Hunter ist in Fig. 4 dargestellt. Es zeigt vom steilen zum flachen Betrachtungswinkel einen Farbflop von Violett nach Gold.

### Vergleichsbeisaiel:

100 g SiO₂-Flakes mit einer mittleren Schichtdicke von 500 nm werden in 1.9 I voll entsalztem Wasser unter Rühren suspendiert und auf 75°C erhitzt. Der pH-Wert der Suspension wird mit 18%-iger Salzsäure auf 2.2 eingestellt. 412 g einer 30%-igen Titantetrachloridlösung (hergestellt durch Lösung von 206 g Titantetrachloridlösung (w=60 Gew.-%) in 206 g voll entsalztem Wasser) werden zudosiert, wobei der pH-Wert durch gleichzeitiges Zutropfen einer 32%-igen Natronlauge konstant gehalten wird. Nach vollständiger Zugabe wird 15 Minuten nachgerührt. Anschließend wird der pH-Wert der Suspension mit 32%-iger Natronlauge auf 7.5 eingestellt und es wird 15 Minuten nachgerührt. Danach wird eine Natronwasserglas-Lösung (270 g Natronwasserglas-Lösung enthaltend 27 Gew.-% SiO₂, gelöst in 270 g voll entsalztem Wasser) zugetropft, wobei der pH-Wert durch gleichzeitiges Zudosieren einer 18%-igen Salzsäure konstant bei 7.5 gehalten wird. Nach vollständiger Zugabe wird 30 Minuten nachgerührt. Nun wird der pH-Wert der Suspension mit 18%-iger Salzsäure auf 2.2 eingestellt, 30 Minuten nachgerührt und 968 g einer 30%-igen Titantetrachloridlösung zugetropft. Durch Zugabe von 32%-iger Natronlauge wird der pH-Wert bei konstant 2.2 gehalten. Es wird erneut 15 Minuten nachgerührt.
Das Produkt wird abfiltriert, gewaschen, getrocknet, bei 800°C kalziniert und durch ein 100 µm Sieb gesiebt.

Man erhält ein Interferenzpigment mir folgendem Aufbau:
TiO₂ (148 nm)/SiO₂ (140 nm)/TiO₂ (63 nm)/Substrat(SiO₂) (500 nm)/TiO₂ (63 nm)/SiO₂ (140 nm)/TiO₂ (148 nm)
Die Gesamtdicke des Pigmentes beträgt 1.2 µm.

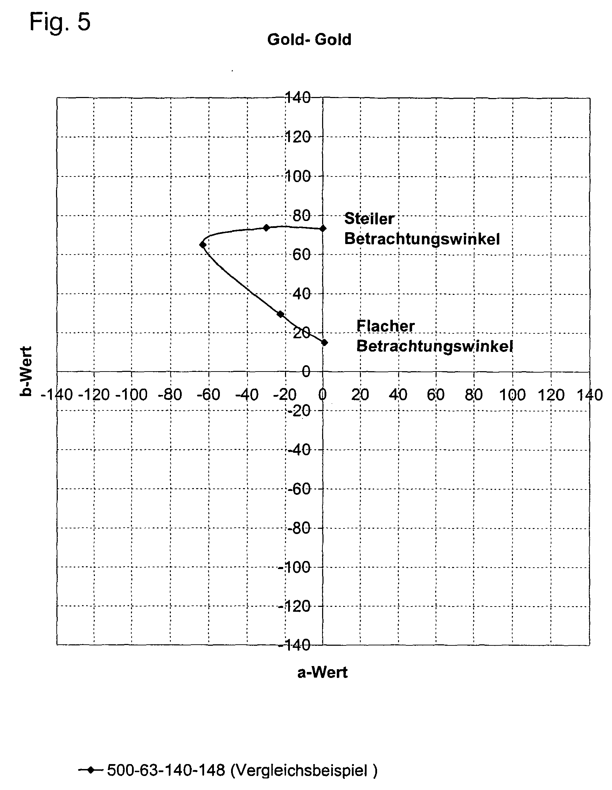

Es werden Lackkarten durch Einarbeitung in Nitrocellulose-Lack angefertigt, die coloristisch vermessen werden. Das entsprechende L,a,b-Farbdiagramm nach Hunter ist in Fig. 5 dargestellt. Es zeigt vom steilen zum flachen Betrachtungswinkel lediglich einen minimalen und vom Auge kaum wahrnehmbaren Farbwechsel von Gold über Grüngold wieder hin zu Gold.

## Patentansprüche

1. Mehrschichtige Interferenzpigmente umfassend ein plättchenförmiges Substrat, das mit alternierenden Schichten von Materialien mit hoher und niedriger Brechzahl beschichtet ist, wobei die Gesamtdicke der Interferenzpigmente nicht größer als 1 µm ist.

2. Interferenzpigmente gemäß Anspruch 1, **dadurch gekennzeichnet, dass** das Substrat synthetische Plättchen umfasst.

3. Interferenzpigmente gemäß Anspruch 2, **dadurch gekennzeichnet, dass** die synthetischen Plättchen aus Siliciumdioxid, Glas, Aluminiumoxid, Zinndioxid, Zirkoniumdioxid, Titandioxid, Magnesiumfluorid und/oder Eisenoxid bestehen.

4. Interferenzpigmente gemäß einem der Ansprüche 1 bis 3, **dadurch gekennzeichnet, dass** der Durchmesser der Substrate zwischen 1 und 250 µm liegt und die Dicke der Substrate zwischen 100 und 600 nm liegt.

5. Interferenzpigmente gemäß einem der Ansprüche 1 bis 4, **dadurch gekennzeichnet, dass** die Materialien mit hoher und niedriger Brechzahl ausgewählt sind aus der Gruppe der Metalloxide, Metalloxidhydrate, Metallsuboxide, Metalle, Metallfluoride, Metallnitride, Metalloxynitride und/oder Mischungen hieraus.

6. Interferenzpigmente gemäß Anspruch 5, **dadurch gekennzeichnet, dass** das Material mit hoher Brechzahl ausgewählt ist aus TiO₂, ZrO₂, ZnO, SnO₂, BiOCl und/oder Mischungen hieraus.

7. Interferenzpigmente gemäß Anspruch 5, **dadurch gekennzeichnet, dass** das Material mit niedriger Brechzahl ausgewählt ist aus SiO₂, SiO(OH)₂, Al₂O₃, AIO(OH), B₂O₃, MgF₂ und/oder Mischungen hieraus.

8. lnterferenzpigmente gemäß einem der Ansprüche 1 bis 7, **dadurch gekennzeichnet, dass** die Dicke der Schichten mit niedriger Brechzahl 20 bis 100 nm beträgt.

9. Interferenzpigmente gemäß einem der Ansprüche 1 bis 8, **dadurch gekennzeichnet, dass** die Interferenzpigmente insgesamt sieben Schichten einschließlich des Substrates umfassen.

10. Interferenzpigmente gemäß einem der Ansprüche 1 bis 9, **dadurch gekennzeichnet, dass** auf den Interferenzpigmenten zusätzlich eine organische Beschichtung aufgebracht ist.

11. Verfahren zur Herstellung von Interferenzpigmenten gemäß Anspruch 1, **dadurch gekennzeichnet, dass** ein Substrat alternierend mit Schichten von Materialien mit hoher und niedriger Brechzahl beschichtet wird, wobei die Dicken der Schichten von Materialien mit hoher und niedriger Brechzahl derart gewählt werden, dass die Gesamtdicke der Interferenzpigmente nicht größer als 1 µm wird.

12. Verfahren gemäß Anspruch 11, **dadurch gekennzeichnet, dass** die Beschichtung mit Schichten von Materialien mit niedriger Brechzahl derart erfolgt, dass die Dicke der Schichten zwischen 20 und 100 nm beträgt.

13. Verfahren gemäß Anspruch 11 oder 12, **dadurch gekennzeichnet, dass** die Beschichtung mit Schichten von Materialien mit hoher und niedriger Brechzahl nasschemisch, durch Sol-Gel-Verfahren und/oder durch CVD- oder PVD-Verfahren erfolgt.

14. Verwendung von Interferenzpigmenten gemäß Anspruch 1 in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.
